# EUROPEAN PATENT SPECIFICATION

(11) **EP 1 840 418 B1**
(45) Date of publication and mention of the grant of the patent: **19.10.2016**
(21) Application number: 05844650.1
(22) Date of filing: 21.12.2005
(51) Int. Cl.: F16H 63/40, B60K 23/00, F16H 61/10, F16H 59/44, F16H 59/78

(54) **SHIFT TIMING INSTRUCTION DEVICE FOR VEHICLE**
SCHALTSTEUERUNGS-BEFEHLSVORRICHTUNG FÜR FAHRZEUG
DISPOSITIF D'INDICATION DU MOMENT DE PASSAGE A LA VITESSE SUPERIEURE POUR VEHICULE

(30) Priority: 21.12.2004 JP 2004369811; 21.12.2004 JP 2004369787; 21.12.2004 JP 2004369828
(43) Date of publication of application: 03.10.2007
(73) Proprietor: Nissan Motor Co., Ltd., Yokohama-shi, Kanagawa 221-0023 (JP)
(72) Inventor: IMAI, Eri, Kanagawa 243-0123 (JP); OOTAKE, Yoshiyuki, Kanagawa 243-0123 (JP)
(74) Representative: Grünecker Patent- und Rechtsanwälte PartG mbB
(86) International application number: PCT/JP2005/024020
(87) International publication number: WO 2006/068301

(56) References cited:
- JP-A- 04 210 159
- JP-A- 59 156 831
- JP-A- 60 026 835
- JP-A- 62 037 229
- US-A- 4 150 497
- US-A- 4 492 112
- US-A- 4 550 596

## Description

This invention relates to a shift timing indication device for a vehicle, according to the preamble of claim 1 and as it is disclosed in JP59156831 A.

### BACKGROUND OF THE INVENTION

US 446596A refers to an apparatus for indicating the optimum shift position for a manual transmission installed in vehicle. The object of the apparatus is to instruct an operator of a vehicle to upshift for an optimum gear shift, for which various running conditions of the vehicle are considered. The apparatus comprises means for detecting speed information (vehicle speed sensor 24), means for judging whether the engine cooling temperature is lower than a predetermined temperature, and an indicator lamp which should instruct the operator to upshift the manual transmission.

JP04-210159A, published by the Japan Patent Office in 1992, discloses a device provided in a vehicle in which a manual transmission is connected to an engine having a catalyst in an exhaust passage, and an upshift indication lamp for indicating an optimum upshift timing is provided on a driving seat. A determination is made in accordance with an engine water temperature or the like as to whether or not engine warm-up has reached completion, and when engine warm-up has not yet reached completion, the upshift timing indication is set further toward a high rotation speed side than the upshift timing indication following the completion of engine warm-up. In so doing, the temperature of exhaust gas flowing to the catalyst is increased, and early catalyst activation is achieved.

However, an upshift indication lamp for an upshift from a first speed to a second speed, for example, is illuminated at a slightly higher vehicle speed prior to the completion of engine warm-up than the vehicle speed at which the upshift indication lamp is illuminated following the completion of engine warm-up, and this may cause a driver to feel uncomfortable. It is therefore an object of this invention to reduce the discomfort felt by the driver in such situations. The object is solved according to the invention by means of an upshift timing indication device comprising the features of claim 1. Advantageous embodiments thereof can be derived from the subclaims. To achieve this object, this invention provides an upshift timing indication device applied to a vehicle having a transmission that is shifted to an indicated shift speed in accordance with a speed shift instruction from a driver, which indicates to the driver a timing for performing an upshift to a predetermined shift speed in accordance with a vehicle speed, and which comprises speed information detecting means for detecting speed information relating to the vehicle, warm-up completion determining means for determining whether or not an engine warm-up is complete, and characterized by upshift vehicle speed modifying means which, when the engine warm-up is not complete, modify an upshift vehicle speed indicated to the driver to a higher side of an upshift vehicle speed following engine warm-up completion, and shift timing indicating means for indicating the upshift timing to the driver when the vehicle reaches a vehicle speed set by the upshift vehicle speed modifying means, and/or indicating that the upshift timing of a manual transmission has arrived even if the upshift vehicle speed modified to the higher side by the engine warm-up completion determining means has not been reached when a predetermined time has elapsed after exceeding the set upshift vehicle speed following engine warm-up completion.

The details as well as other features and advantages of this invention are set forth in the remainder of the specification and are shown in the accompanying drawings.

### BRIEF DESCRIPTION OF THE DRAWINGS

FIG. 1 is a schematic diagram of a vehicle, illustrating an embodiment of this invention.
FIG. 2 is a flowchart illustrating control of a display device.
FIG. 3 is a characteristic diagram showing an upshift vehicle speed VSP12 from a first speed to a second speed, and a predetermined delay D12 between reaching the upshift vehicle speed VSP12 and instructing an upshift from the first speed to the second speed.
FIG. 4 is a waveform diagram illustrating the actions of a first embodiment.
FIG. 5 is a characteristic diagram showing a delay D12 to instruction of an upshift from the first speed to the second speed in a second embodiment.
FIG. 6 shows a modified example of the display device.
FIG. 7 is a flowchart illustrating control of a monitor in a third embodiment.

### DESCRIPTION OF THE PREFERRED EMBODIMENTS

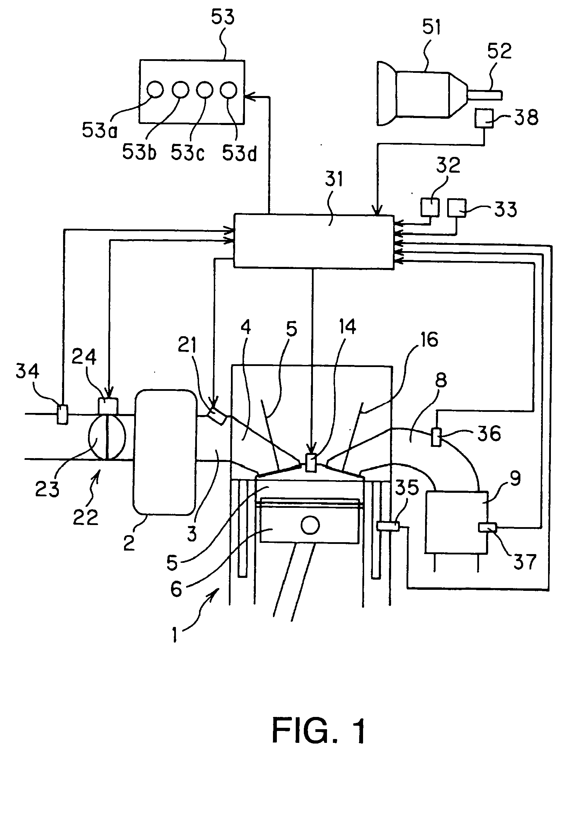

Embodiments of this invention will be described below on the basis of the drawings. FIG. 1 is a schematic diagram of a vehicle in which a manual transmission is connected to a gasoline injection engine.

A torque required by a driver is known from an accelerator opening (accelerator pedal depression amount) detected by an accelerator sensor 32. Hence, a required torque is calculated by an engine controller 31 on the basis of the accelerator opening and an engine rotation speed Ne detected by a crank angle sensor 33, a target air amount and a target equivalence ratio are determined to obtain the required torque, an intake air amount taken into the engine is controlled via a throttle device 22 to obtain the target air amount, and a fuel injection amount is controlled via an injector 21 to obtain the target equivalence ratio.

The throttle device 22 is constituted by an intake throttle valve 23, a throttle motor 24 which drives the intake throttle valve, and so on. The amount of air is adjusted by the intake throttle valve 23 to obtain the target air amount, whereupon the air is accumulated in an intake collector 2. The accumulated air is then introduced into a combustion chamber 5 provided in each cylinder through an intake manifold 3.

The fuel injection amount determined to obtain the target equivalence ratio is supplied intermittently toward an intake port 4 of each cylinder at a predetermined timing by a fuel injection valve 21 disposed in the intake port. More specifically, a basic required fuel injection amount per revolution of the engine is calculated in accordance with an intake air amount detected by an air flow meter 34 and the engine rotation speed detected by the crank angle sensor 33, and the fuel injection amount is determined by multiplying the basic fuel injection amount by the target equivalence ratio.

The fuel that is injected to the intake port 4 mixes with the air to create an air-fuel mixture. The air-fuel mixture is trapped inside the combustion chamber 5 by closing an intake valve 15, compressed when a piston 6 rises, ignited by an ignition plug 14, and burned. Gas pressure generated as a result of the combustion works to push the piston 6 downward, and this reciprocating motion of the piston 6 is converted into rotary motion of a crankshaft. Post-combustion gas (exhaust gas) is discharged to an exhaust passage 8 when an exhaust valve 16 is opened.

A three-way catalyst 9 is provided in the exhaust passage 8. The three-way catalyst 9 is capable of removing HC, CO, and NOx contained in the exhaust gas simultaneously and efficiently when an air-fuel ratio of the exhaust gas is within a narrow range centering on the stoichiometric air-fuel ratio. Accordingly, the air-fuel ratio is subjected to feedback control by the engine controller 31 on the basis of a signal from an 02 sensor 36 provided upstream of the three-way catalyst 9.

A manual transmission 51 having five forward shift speeds is connected to the engine constituted as described above. A rotation speed of a drive shaft 52 is determined in accordance with a gear ratio determined by the shift speed of the manual transmission 51. A motive force of the drive shaft is ultimately transmitted to vehicle wheels, not shown in the drawing, enabling the vehicle to travel.

By providing the driver with information indicating the shift speed of the manual transmission 51 at which optimum running fuel economy can be achieved, the driver can perform a speed shift corresponding to this information, and as a result, the running fuel economy can be optimized. For this purpose, a display device 53 for indicating an upshift timing is provided in the driving cabin. The display device 53 is constituted by four indication lamps 53a, 53b, 53c, 53d. When a predetermined delay D12 has elapsed after an upshift vehicle speed VSP12 from a first speed to a second speed is reached, a first indication lamp 53a (upshift timing indicating means) is illuminated, indicating that the upshift timing from the first speed to the second speed has arrived. Further, when a predetermined delay D23 has elapsed after an upshift vehicle speed VSP23 from the second speed to a third speed is reached, a second indication lamp 53b is illuminated, indicating that the upshift timing from the second speed to the third speed has arrived. Similarly, when a predetermined delay D34 has elapsed after an upshift vehicle speed VSP34 from the third speed to a fourth speed is reached, a third indication lamp 53c is illuminated, indicating that the upshift timing from the third speed to the fourth speed has arrived, and when a predetermined delay D45 has elapsed after an upshift vehicle speed VSP45 from the fourth speed to a fifth speed is reached, a fourth indication lamp 53d is illuminated, indicating that the upshift timing from the fourth speed to the fifth speed has arrived.

The upshift vehicle speeds VSP12, VSP23, VSP34, VSP45 and predetermined delays D12, D23, D34, D45, which are used following the completion of engine warm-up, are set in advance.

When the catalyst 9 is inactive, the harmful components of the exhaust gas cannot be purified efficiently, and therefore the catalyst 9 must be activated early during cold start-up of the engine. It is known that prior to the completion of engine warm-up, the temperature of the exhaust gas introduced into the catalyst can be increased, enabling early activation of the catalyst, by setting the upshift indication timing to the high rotation speed side of the engine (see JPH04-210159), and therefore, prior to the completion of engine warm-up, the upshift vehicle speed VSP12 from the first speed to the second speed in particular may be set higher than the upshift vehicle speed VSP12 following the completion of engine warm-up, and the predetermined delay D12 between reaching the upshift vehicle speed VSP12 and performing an upshift from the first speed to the second speed may be set to be longer than the predetermined delay D12 following the completion of engine warm-up.

However, prior to the completion of engine warm-up, the start-up temperature may be -20°C or 20°C, and hence there is a great difference in the time required to activate the catalyst 9 depending on the water temperature at the time of start-up (the start-up state). Therefore, if the upshift vehicle speed VSP12 from the first speed to the second speed and the predetermined delay D12 prior to the completion of engine warm-up are set uniformly, the set values thereof are unsuitable for start-up at a temperature that is lower than the start-up water temperature corresponding to the set upshift vehicle speed VSP12 and delay time D12 since the upshift vehicle speed corresponding to the set value is too low and the delay corresponding to the set value is too short, and as a result, the catalyst 9 cannot be activated sufficiently early. On the other hand, when start-up is performed at a higher temperature than the start-up water temperature corresponding to the set upshift vehicle speed VSP12 and delay time D12, the upshift vehicle speed corresponding to the set value is too high and the delay corresponding to the set value is too long. As a result, the upshift to the second speed is delayed unnecessarily even though the catalyst 9 is already activated, leading to deterioration of the running fuel economy.

Hence, in a first embodiment, the upshift vehicle speed VSP12 from the first speed to the second speed and the predetermined delay D12 after reaching the upshift vehicle speed VSP12 are set in accordance with the water temperature at the time of start-up (the start-up state).

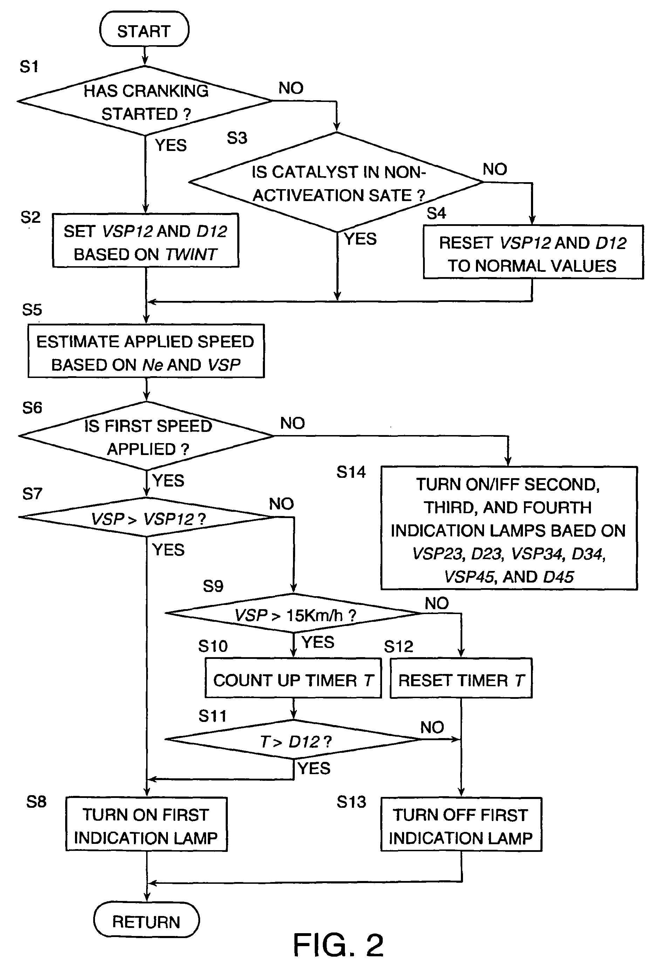

Control executed by the engine controller 31 for this purpose will now be described in detail using the flowchart in FIG. 2.

FIG. 2 is executed repeatedly at fixed time intervals (of 100msec, for example). In FIG. 2, a determination is made in a step 1 as to whether or not cranking has begun on the basis of a signal from a starter switch (not shown). When the signal from the starter switch is ON, it is determined that cranking has begun, and the routine advances to a step 2, where the upshift vehicle speed VSP12 from the first speed to the second speed and the delay D12 between exceeding a predetermined speed and instructing an upshift from the first speed to the second speed are set on the basis of a water temperature detected by a water temperature sensor 35 at this time, or in other words a start-up water temperature TWINT.

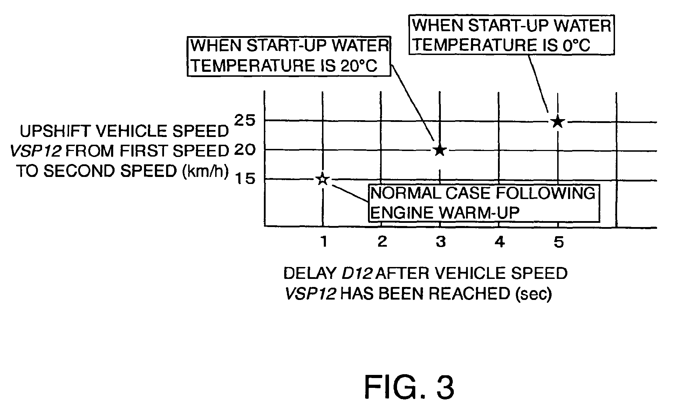

FIG. 3 shows an example of setting of the upshift vehicle speed VSP12 and the delay D12. Assuming that the upshift vehicle speed VSP12 and the delay time D12 following the completion of engine warm-up are 15km/h and 1sec, respectively, prior to the completion of engine warm-up, the upshift vehicle speed VSP12 is raised as the start-up water temperature TWINT decreases, and the delay D12 is lengthened as the start-up water temperature TWINT decreases. For example, when the start-up water temperature is 20°C, the upshift vehicle speed VSP12 is raised to 20km/h, which is higher than the value of 15km/h following the completion of engine warm-up, and the delay D12 is lengthened to 3sec, which is longer than the value of 1sec following the completion of engine warm-up. Further, when the start-up water temperature is 0°C, i.e. lower than 20°C, the upshift vehicle speed VSP12 is raised to 25km/h and the delay D12 is lengthened to 5sec.

Returning to FIG. 2, in a step 5 the shift speed selected by the driver is estimated on the basis of the engine rotation speed Ne detected by the crank angle sensor 33 and an actual vehicle speed VSP detected by a vehicle speed sensor 38. For example, a map of the shift speeds that tend to be selected by the driver is created in advance using the engine rotation speed Ne and the actual vehicle speed VSP as parameters, and the shift speed selected by the driver is estimated by referring to the shift speed map.

In a step 6, a determination is made from the result of the estimation as to whether or not the first speed has been selected. When it is estimated that the first speed has been selected, the routine advances to a step 7, where the actual vehicle speed VSP is compared to the upshift vehicle speed VSP12 set in the step 2 on the basis of the start-up water temperature TWINT. When the actual vehicle speed VSP has reached the upshift vehicle speed VSP12, the routine advances to a step 8, where the first indication lamp 53a of the display device is illuminated to inform the driver that the upshift timing from the first speed to the second speed has arrived. When the actual vehicle speed VSP has not reached the upshift vehicle speed VSP12, the routine advances to a step 9, where the actual vehicle speed VSP is compared to 15km/h, i.e. the value following the completion of engine warm-up. When the actual vehicle speed VSP has not reached 15km/h, the routine advances to steps 12, 13, where a timer T is reset to zero, the first indication lamp 53a of the display device is held in an extinguished state, and the current processing is terminated.

When the actual vehicle speed VSP has exceeded 15km/h, i.e. the value following the completion of engine warm-up, the routine advances to a step 10, where the timer T is counted up from zero. The timer T is used to measure the amount of elapsed time after the actual vehicle speed VSP reaches 15km/h, i.e. the upshift vehicle speed following the completion of engine warm-up.

In the step 12, the timer T is compared to the delay D12. Immediately after the actual vehicle speed VSP reaches 15km/h, i.e. the upshift vehicle speed following the completion of engine warm-up, the value of the timer T is smaller than the delay D12, and therefore the routine advances to the step 13, where the first indication lamp 53a of the display device is held in an extinguished state and the current processing is terminated.

From the next execution onward, the count up operation of the timer T in the step 10 is repeated as long as the actual vehicle speed VSP is equal to or greater than 15km/h, i.e. the upshift vehicle speed following the completion of engine warm-up, even if the actual vehicle speed VSP is equal to or lower than the upshift vehicle speed VSP12. Hence, eventually the timer T exceeds the delay D12. At this time, the routine advances from the step 8 to the step 11, where the first indication lamp 53a of the display device is illuminated, indicating that the upshift timing from the first speed to the second speed has arrived.

On the other hand, when it is estimated that the first speed has not been selected, the routine advances from the step 6 to a step 14, where control is performed to illuminate and extinguish the second, third and fourth indication lamps 53b, 53c, 53d of the display device on the basis of the upshift vehicle speed VSP23 from the second speed to the third speed and the predetermined delay D23 from the point at which the actual vehicle speed VSP reaches the upshift vehicle speed VSP23 to the point at which an upshift from the second speed to the third speed is instructed, the upshift vehicle speed VSP34 from the third speed to the fourth speed and the predetermined delay D34 from the point at which the actual vehicle speed VSP reaches the vehicle speed VSP34 to the point at which an upshift from the third speed to the fourth speed is instructed, and the upshift vehicle speed VSP45 from the fourth speed to the fifth speed and the predetermined delay D45 from the point at which the actual vehicle speed VSP reaches the vehicle speed VSP45 to the point at which an upshift from the fourth speed to the fifth speed is instructed.

In this embodiment, the upshift vehicle speeds VSP23, VSP34, VSP45 and predetermined delays D23, D34, D45 are all fixed values.

As described above, the upshift vehicle speed VSP12 and the predetermined delay D12 are adjusted in accordance with the fact that the time required to activate the catalyst 9 lengthens as the start-up water temperature TWINT decreases. Accordingly, prior to the completion of engine warm-up, the upshift vehicle speed VSP12 is raised as the start-up water temperature TWINT decreases, and the predetermined delay D12 is lengthened as the start-up water temperature TWINT decreases. Following activation of the catalyst 9, on the other hand, an upshift timing that takes the running fuel economy into account is preferably indicated to the driver.

Hence, when cranking is no longer underway, or in other words following cranking, the routine advances from the step 1 to a step 3, where a catalyst temperature TCAT detected by a catalyst temperature sensor 37 is compared to a predetermined catalyst activation temperature T0. When the catalyst temperature TCAT is equal to or higher than the catalyst activation temperature T0 (the catalyst is activated), the routine advances from the step 3 to a step 4, where the upshift vehicle speed VSP12 from the first speed to the second speed and the predetermined delay D12 are returned to their values following the completion of engine warm-up, or in other words their normal set values. The operations of the steps 5 to 12 are then performed to indicate the normal upshift timing following the completion of engine warm-up.

On the other hand, when the catalyst temperature TCAT is lower than the catalyst activation temperature T0 (the catalyst is not activated), the operations of the steps 5 to 12 are performed to indicate the upshift timing prior to the completion of engine warm-up.

In this embodiment, a determination as to whether or not the catalyst has been activated is made from the temperature of the catalyst 9 as a condition for determining the completion of engine warm-up, but this embodiment is not limited thereto. For example, an exhaust gas temperature TEXH at an engine outlet or a catalyst inlet may be estimated on the basis of operating conditions of the engine (the load and rotation speed of the engine), and the determination as to whether or not the catalyst 9 is activated may be made on the basis of the exhaust gas temperature TEXH. The completion of engine warm-up may also be determined from the temperature of engine cooling water, using a predetermined temperature increase immediately after engine start-up as a condition.

According to the control flow described above, the first indication lamp 53a is switched from an extinguished state to an illuminated state when the vehicle speed exceeds 15km/h following the completion of engine warm-up, and if the driver immediately shifts the shift speed of the manual transmission 51 up from the first speed to the second speed in response thereto, traveling can be performed at a favorable running fuel economy. Prior to the completion of engine warm-up, the upshift vehicle speed VSP12, which is determined in accordance with the start-up water temperature, is set at 20km/h, for example, and the first indication lamp 53a is not switched from the extinguished state to the illuminated state until this vehicle speed is exceeded. Thus, the driver can be instructed to raise the engine rotation speed slightly in response to a cold start-up. Further, when a predetermined amount of time has elapsed after the vehicle speed exceeds 15km/h, the first indication lamp 53a is switched from the extinguished state to the illuminated state even if the vehicle speed has not reached 20km/h. In so doing, the driver can be prevented from feeling the sense of discomfort that arises when the vehicle is traveling continuously at 18km/h, for example, and a speed shift instruction is not issued even though the vehicle speed has exceeded 15km/h, which is the normal vehicle speed at which a speed shift is instructed.

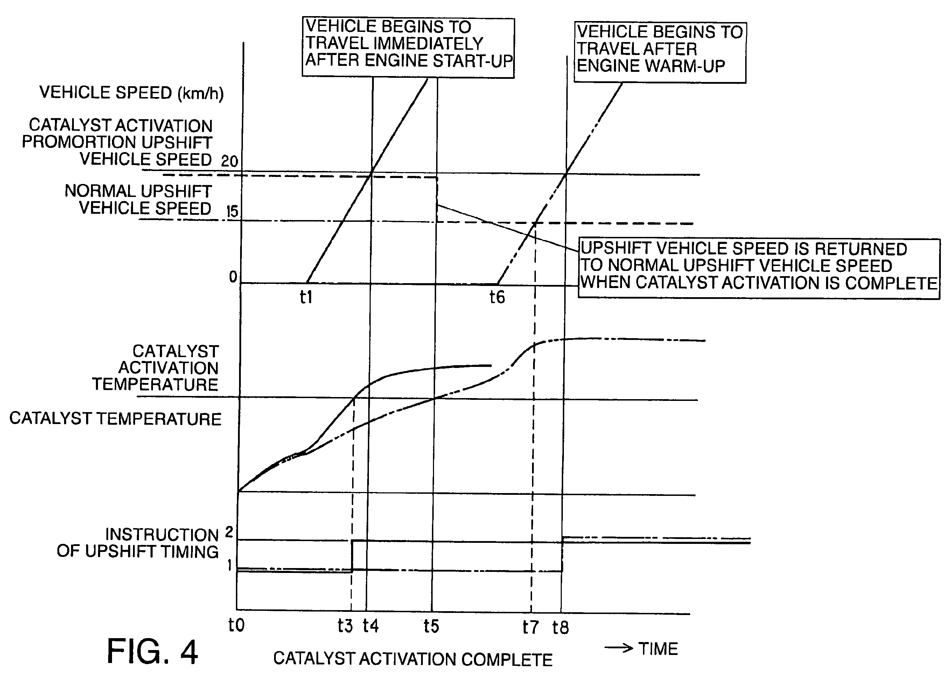

The actions of the first embodiment will now be described with reference to FIG. 4. FIG. 4 shows, in model form, the difference between variation in the catalyst temperature TCAT when the vehicle begins to travel following the completion of engine warm-up (see the dot-dot-dash line) and variation in the catalyst temperature TCAT when the vehicle begins to travel immediately after engine start-up (see the solid line) at an identical start-up water temperature TWINT of 20°C. Since the diagram is a model, the vehicle speed increases linearly. The lowermost section of the diagram shows the manner in which the upshift timing from the first speed to the second speed is indicated, the solid line illustrating a case in which the vehicle begins to travel immediately after engine start-up and the dot-dot-dash line illustrating a case in which the vehicle begins to travel following the completion of engine warm-up.

When the engine is started at a timing t0, the catalyst temperature TCAT rises gradually. The upshift vehicle speed VSP12 from the first speed to the second speed is determined according to the start-up water temperature TWINT, and in this case, the start-up water temperature TWINT is 20°C. Therefore, the upshift vehicle speed VSP12 is set at 20km/h, i.e. higher than the normal value of 15km/h following the completion of engine warm-up.

When the vehicle begins to travel at a timing t1 immediately after engine start-up, a speed shift indication is not issued until the vehicle reaches 20km/h, which is higher than the normal value of 15km/h following the completion of engine warm-up. If the driver does not perform a speed shift until this timing, the catalyst temperature TCAT can be raised more quickly, as shown by the solid line. When the catalyst temperature TCAT reaches the activation temperature T0 at a timing t3, it is determined that activation of the catalyst 9 is complete, and therefore, at the timing t3, the upshift vehicle speed VSP12 is returned to 15km/h from 20km/h. At the timing t3, the actual vehicle speed VSP exceeds the upshift vehicle speed VSP12 of 15km/h, and therefore, at the timing t3, the first indication lamp 53a is illuminated to indicate that the upshift timing from the first speed to the second speed has arrived (see the solid line in the lowermost section). When the catalyst temperature TCAT increases as shown by the dot-dash line, an upshift instruction is issued at t4, i.e. when the vehicle speed exceeds 20km/h. Further, although not shown in the time chart of FIG. 4, when the vehicle speed stays between 15km/h and 20km/h such that the interval between t3 and t4 lengthens, the first indication lamp 53a is illuminated to indicate that the upshift timing from the first speed to the second speed has arrived when the delay D12 set in accordance with the start-up water temperature TWINT elapses, even though the vehicle speed has not exceeded 20km/h. In so doing, the driver can be prevented from feeling the sense of discomfort that arises when an upshift instruction is not issued even though the vehicle speed has exceeded 15km/h, which is the normal vehicle speed at which an upshift is instructed.

On the other hand, when the vehicle begins to travel at a timing t6, warm-up of the engine is completed prior thereto. In other words, the catalyst temperature TCAT increases gradually as shown by the dot-dot-dash line until activation of the catalyst 9 is completed at a timing t5, and therefore, at the timing t5, the upshift vehicle speed VSP12 is returned to 15km/h from 20km/h (see the broken line in the uppermost section). Hence, when the vehicle begins to travel thereafter at the timing t6, the actual vehicle speed VSP reaches the upshift vehicle speed VSP12 (=15km/h) at a timing t7, and at a timing t8 following the predetermined delay D12 of 1sec, the first indication lamp 53a is illuminated to indicate that the upshift timing from the first speed to the second speed has arrived (see the dot-dot-dash line in the lowermost section).

Hence, according to this embodiment, the upshift vehicle speed VSP12 from the first speed to the second speed and the predetermined delay D12 between reaching the set upshift vehicle speed VSP12 (15km/h) following the completion of engine warm-up and instructing an upshift from the first speed to the second speed are set in accordance with the start-up water temperature TWINT (the start-up state), and therefore, as long as the driver performs the upshift from the first speed to the second speed in accordance with the indication of the first indication lamp 53a (upshift timing indicating means) of the display device, early activation of the catalyst 9 can be performed reliably, irrespective of differences in the start-up water temperature TWINT. Counting time for shifting from the first speed to the second speed may be started form when the vehicle speed reaches the vicinity of the upshift vehicle speed VSP12 (15km/h) following the completion of the engine warm-up, for example from 16km/h. Further, in this embodiment the other upshifts are fixed, but the upshift vehicle speeds and delays thereof may be set in accordance with the engine start-up state, similarly to the upshift from the first speed to the second speed.

According to this embodiment, the upshift vehicle speed VSP12 from the first speed to the second speed and the predetermined delay D12 are returned to their values following the completion of engine warm-up once activation of the catalyst 9 is complete, and therefore deterioration of the running fuel economy due to a delay in the upshift from the first speed to the second speed when activation of the catalyst 9 is complete can be prevented.

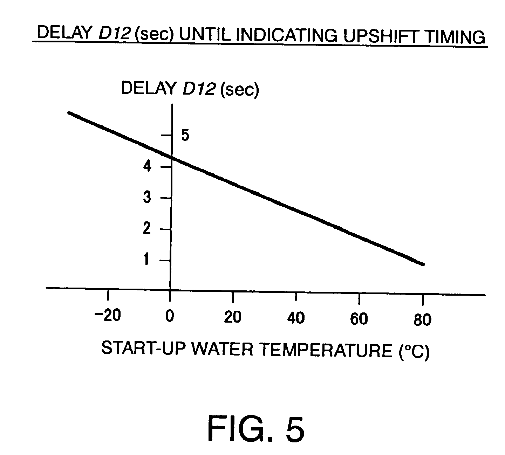

FIG. 5 shows a second embodiment, and replaces FIG. 3 of the first embodiment. A flowchart of the second embodiment has been omitted, but is similar to FIG. 2.

The manner of indicating the upshift timing in the second embodiment differs from that of the first embodiment. More specifically, when the second embodiment is provided with upshift timing indicating means for indicating that the upshift timing from the first speed to the second speed has arrived following the elapse of the delay D12 between establishing the upshift condition from the first speed to the second speed and indicating the upshift timing from the first speed to the second speed, the delay D12 to indication of the upshift timing from the first speed to the second speed is set in accordance with the start-up water temperature TWINT (the start-up state), as shown in FIG. 5. In FIG. 5, the delay D12 between establishing the upshift condition and performing the upshift from the first speed to the second speed is made longer as the start-up water temperature TWINT decreases.

Hence, prior to the completion of engine warm-up, the delay D12 between establishing the upshift condition and performing the upshift from the first speed to the second speed is lengthened according to the start-up water temperature TWINT in response to the fact that as the start-up water temperature TWINT decreases, the time required to activate the catalyst 9 increases.

According to the second embodiment, the delay D12 between establishing the upshift condition from the first speed to the second speed and instructing the upshift from the first speed to the second speed is set in accordance with the start-up water temperature TWINT, and therefore, as long as the driver performs the upshift from the first speed to the second speed in accordance with the indication of the upshift timing indicating means, early activation of the catalyst 9 can be performed reliably, irrespective of differences in the start-up water temperature TWINT.

Further, in the second embodiment also, the delay D12 is returned to its value following the completion of engine warm-up when activation of the catalyst 9 is complete, and therefore deterioration of the running fuel economy due to a delay in the upshift timing from the first speed to the second speed when activation of the catalyst 9 is complete can be prevented.

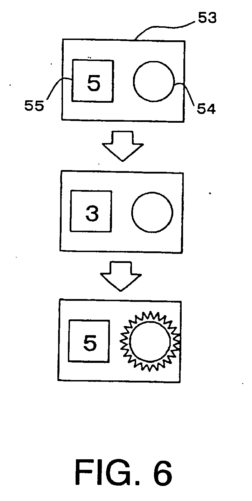

FIG. 6 shows a modified example of the display device 53, which is applicable to either of the two embodiments described above.

This display device 53 comprises an indication lamp 54 and a time display window 55. The display device 53 comprises a single indication lamp 54, which is illuminated to instruct the driver to perform an upshift at the upshift timing from the first speed to the second speed, the upshift timing from the second speed to the third speed, the upshift timing from the third speed to the fourth speed, and the upshift timing from the fourth speed to the fifth speed.

The time display window 55 is used when the catalyst 9 is inactive to display the delay D12 set during start-up. When the start-up water temperature TWINT is low, a numeral displayed on the time display window 55 is large. Therefore, the driver can understand easily that the indication lamp 54 will be illuminated at a slight delay, and can follow the indication on the display device 53 easily.

It should be noted that D12-T (in other words, the remaining delay D12) may be displayed during count-up of the timer T. By performing display in this manner, the driver can be informed of the time remaining to the upshift timing (illumination of the indication lamp 54) by looking at the display device 53 when the driver feels a sense of discomfort at the delay in illumination of the indication lamp 54, and as a result, further assistance can be provided in performing an upshift at an appropriate timing.

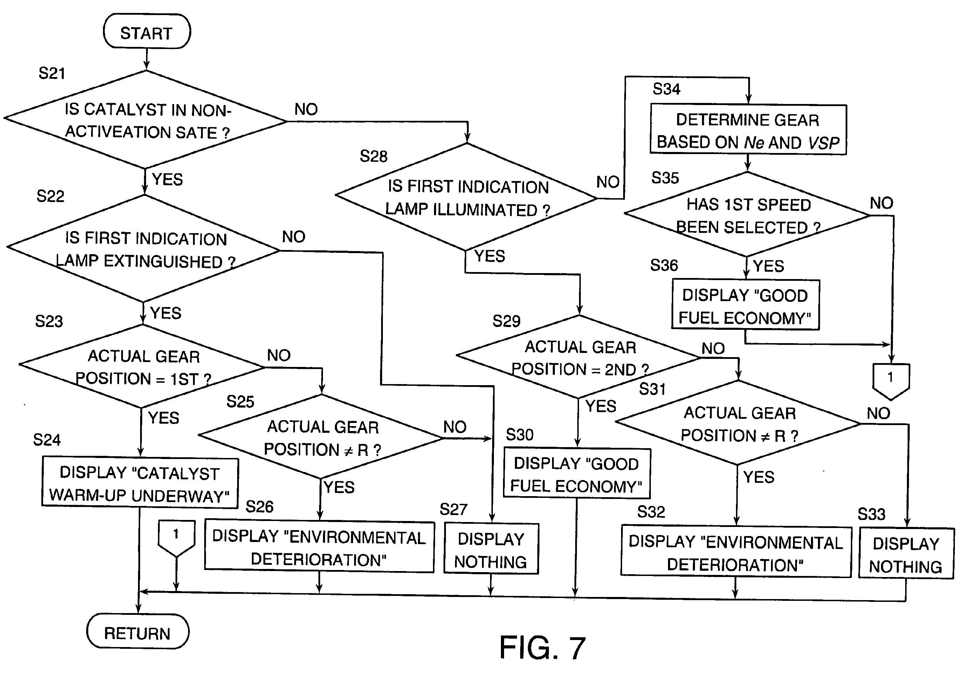

FIG. 7 shows a flowchart of a third embodiment, which is used to control a monitor (display device). This flow is executed at fixed time intervals (of 100msec, for example).

Similarly to the first embodiment described above, when the upshift vehicle speed VSP12 from the first speed to the second speed and the delay D12 differ before and after the completion of engine warm-up so that the catalyst 9 can be activated early before the completion of engine warm-up, the driver may be left with a sense that the upshift timing from the first speed to the second speed is late due to the delay in illumination of the first indication lamp 53a prior to the completion of engine warm-up in comparison with the illumination timing of the first indication lamp 53a following the completion of engine warm-up. If, as a result of this sense of discomfort, the driver performs an upshift from the first speed to the second speed without waiting for illumination of the first indication lamp 53a (the upshift timing from the first speed to the second speed) before the completion of engine warm-up, early activation of the catalyst 9 becomes substantially impossible.

Hence, in the third embodiment, which is based on either of the first and second embodiments, a monitor capable of displaying a message in alphabetic characters is provided in the vicinity of the driving seat, a determination is made as to whether or not the upshift from the first speed to the second speed has been performed in accordance with the indication of the first indication lamp 53a (shift timing indicating means), and when it is determined from the determination result that the upshift from the first speed to the second speed has been performed in accordance with the indication of the first indication lamp 53a, a message signifying this fact is displayed on the driving seat monitor. Further, when the upshift from the first speed to the second speed has not been performed in accordance with the indication of the first indication lamp 53a, a message signifying this fact is displayed on the driving seat monitor, and thus the sense of discomfort relating to driving performance that is produced by the difference in the upshift vehicle speed VSP12 from the first speed to the second speed before and after the completion of engine warm-up is reduced.

It should be noted that the upshift timing indication device 53 and the monitor are preferably disposed adjacent to each other so that the state of the first indication lamp 53a and the message can be viewed simultaneously (without shifting the line of vision).

Further, while waiting for the upshift timing from the first speed to the second speed in accordance with the indication of the first indication lamp 53a (shift timing indicating means), a message signifying this fact may be displayed on the driving seat monitor, and when not waiting for the upshift timing from the first speed to the second speed in accordance with the indication of the first indication lamp 53a (shift timing indicating means), a message signifying this fact may be displayed on the driving seat monitor. In so doing, the opportunities for early activation of the catalyst are increased.

In FIG. 7, steps 21, 22, 23, 25 are steps for determining whether or not the upshift timing from the first speed to the second speed is being waited for in accordance with the indication of the first indication lamp 53a. In the step 21, the catalyst temperature TCAT detected by the catalyst sensor 37 is compared to the predetermined catalyst activation temperature T0. When the catalyst temperature TCAT is lower than the catalyst activation temperature T0 (the catalyst is in an inactive state), the routine advances to the step 22, where a determination is made as to whether or not the first indication lamp 53a of the upshift timing indication device is extinguished.

When the first indication lamp 53a is extinguished, the engine controller 31 determines that the driver has been instructed to wait for the upshift timing from the first speed to the second speed to achieve early activation of the catalyst 9, and therefore the routine advances to the step 23, where an actual gear position is compared to the first speed.

Here, the actual gear position is detected by providing a similar switch to an inhibitor switch provided in an automatic transmission. Alternatively, the actual gear position may be estimated from the ratio between the actual vehicle speed VSP and the engine rotation speed Ne.

When the actual gear position is the first speed, it is determined that the driver is waiting for the upshift timing from the first speed to the second speed in accordance with the indication of the first indication lamp 53a, and therefore, in a step 24, a message saying "catalyst warm-up underway" is displayed in alphabetic characters on the driving seat monitor, whereupon the current processing is terminated. The "catalyst warm-up underway" message indicates a state of waiting for the upshift timing from the first speed to the second speed in accordance with the indication of the first indication lamp 53a while maintaining the first speed. Having read the "catalyst warm-up underway" message, the driver understands why the driver must wait for the upshift timing from the first speed to the second speed, and therefore psychological resistance to waiting for the upshift timing from the first speed to the second speed disappears.

On the other hand, when the actual gear position is not the first speed, it is determined that the driver has not waited for the upshift timing from the first speed to the second speed in accordance with the indication of the first indication lamp 53a, and therefore, after making sure that the actual gear position is not an R (reverse) position in the step 25, a message saying "environmental deterioration" is displayed in alphabetic characters on the driving seat monitor in a step 26, whereupon the current processing is terminated. The "environmental deterioration" message indicates that the upshift timing from the first speed to the second speed has not been waited for in accordance with the indication of the first indication lamp 53a while maintaining the first speed. If, having read the "environmental deterioration" message, the driver returns the actual gear position to the first speed, the routine advances from the steps 21, 22, 23 to the step 24 during the next execution, and in the step 24, the "catalyst warm-up underway" message is displayed on the driving seat monitor in alphabetic characters.

When the actual gear position is the R position, the routine advances from the step 25 to a step 27, where nothing is displayed on the driving seat monitor. When the catalyst 9 is inactive and the first indication lamp 53a is illuminated in the steps 21, 22, it is determined that such a situation is impossible, and the routine advances from the step 22 to the step 27, where nothing is displayed on the driving seat monitor.

Meanwhile, steps 21, 28, 29, 31, 34 and 35 are steps for determining whether or not an upshift has been performed in accordance with the indication of the first indication lamp 53a. When the catalyst 9 is activated, the routine advances from the step 21 to the step 28, where the first indication lamp 53a is checked. When the first indication lamp 53a is illuminated, it is determined that early activation of the catalyst 9 is complete and the upshift timing from the first speed to the second speed has arrived, or in other words that an upshift from the first speed to the second speed is being indicated to the driver. Then, in the step 29, the actual gear position is compared to the second speed. When the actual gear position is the second speed, it is determined that the driver has performed an upshift from the first speed to the second speed in accordance with the indication of the first indication lamp 53a, and therefore, in a step 30, a message saying "good fuel economy" is displayed in alphabetic characters on the driving seat monitor, whereupon the current processing is terminated. The "good fuel economy" message indicates that an upshift has been performed from the first speed to the second speed in accordance with the indication of the first indication lamp 53a.

On the other hand, when the actual gear position is not the second speed, it is determined that the driver has not performed an upshift to the second speed in accordance with the indication of the first indication lamp 53a, and in the step 31, after making sure that the actual gear position is not the R position, the "environmental deterioration" message is displayed in alphabetic characters on the driving seat monitor in a step 32, whereupon the current processing is terminated. Here, the "environmental deterioration" message indicates that an upshift from the first speed to the second speed has not been performed in accordance with the indication of the first indication lamp 53a. If, having read the "environmental deterioration" message, the driver shifts the actual gear position up from the first speed to the second speed or down to the second speed from the third or fourth speed, the routine advances from the steps 21, 28, 29 to the step 30 during the next execution, and in the step 30, the "good fuel economy" message is displayed on the driving seat monitor in alphabetic characters.

When the actual gear position is the R position, the routine advances from the step 31 to a step 33, where nothing is displayed on the driving seat monitor.

When the first indication lamp 53a is extinguished in the step 28, the routine advances to steps 34, 35, where a determination is made as to whether or not the first speed has been selected, similarly to the steps 5, 6 in FIG. 2. If the first speed has been selected, the routine advances to a step 36, where the "good fuel economy" message is displayed on the driving seat monitor in alphabetic characters. Here, the "good fuel economy" message indicates that the upshift timing from the first speed to the second speed is being waited for in accordance with the indication of the first indication lamp 53a.

In the step 21, a determination is made on the basis of the catalyst temperature TCAT as to whether or not the catalyst 9 is inactive, but the determination as to whether or not the catalyst 9 is inactive may be made on the basis of the start-up water temperature TWINT detected by the water temperature sensor 35. For example, when the start-up water temperature TWINT is equal to or lower than a predetermined value (50°C, for example), the catalyst 9 is determined to be inactive. It should be noted that the predetermined value is not limited to 50°C, and may be set as appropriate.

In the step 24, "catalyst warm-up underway" is displayed in alphabetic characters, but the following displays may be employed instead or in addition.
(1) Instead of "catalyst warm-up underway", "environment protection measures under implementation" or the like may be displayed in alphabetic characters.
(2) The background color of the alphabetic characters of "catalyst warm-up underway" or "environment protection measures under implementation" may be made red.
(3) When the time required to activate the catalyst 9 is known, this time may be displayed and counted down on the monitor simultaneously.
(4) Instead of, or in addition to, displaying "catalyst warm-up underway" or "environment protection measures under implementation" in alphabetic characters, these messages may be relayed to the driver by voice.
   In the step 30, "good fuel economy" is displayed in alphabetic characters, but the following displays may be employed instead or in addition.
(5) The background color of the alphabetic characters of "good fuel economy" may be made blue.
(6) Instead of, or in addition to, displaying "good fuel economy" in alphabetic characters, this message may be relayed to the driver by voice.
   In the steps 26 and 32, "environmental deterioration" is displayed in alphabetic characters, but the following displays may be employed instead or in addition.
(7) Instead of "environmental deterioration", "please drive as indicated" or the like may be displayed in alphabetic characters, thereby encouraging the driver to shift gear in accordance with the indication of the first indication lamp 53a.
(8) The background color of the alphabetic characters of "environmental deterioration" or "please drive as indicated", or the alphabetic characters themselves, may be caused to flash, thereby encouraging the driver to shift gear in accordance with the indication of the first indication lamp 53a.
(9) Instead of, or in addition to, displaying "environmental deterioration" or "please drive as indicated" in alphabetic characters, these messages may be relayed to the driver by voice.

The actions of the third embodiment will now be described.

According to the third embodiment, when an upshift has been performed in accordance with the indication of the first indication lamp 53a (upshift timing indicating means), "good fuel economy" is displayed on the driving seat monitor (display device) as a message signifying this fact, and when an upshift has not been performed in accordance with the indication of the first indication lamp 53a, "environmental deterioration" is displayed on the driving seat monitor as a message signifying this fact (the steps 21, 28, 29, 30, the steps 21, 28, 34, 35, 36, and the steps 21, 28, 29, 31, 32 in FIG. 7). Thus, the sense of driving discomfort felt by the driver due to the difference in the upshift vehicle speed VSP12 from the first speed to the second speed and the predetermined delay D12 before and after the completion of engine warm-up can be reduced. Furthermore, according to the third embodiment (the invention described in claim 1), the driver can be alerted to environmental deterioration, and hence the driver is more likely to perform an upshift in accordance with the indication of the first indication lamp 53a (upshift timing indicating means).

By displaying the fact that the fuel economy is favorable on the driving seat monitor, as in the step 30 in FIG. 7 of the third embodiment, drivers who are concerned about fuel economy are more likely to perform an upshift in accordance with the indication of the first indication lamp 53a (upshift timing indicating means).

When "environmental deterioration" is displayed on the driving seat monitor, as in the step 32 in FIG. 7 of the third embodiment, drivers who are interested in environmental protection are more likely to perform an upshift in accordance with the indication of the first indication lamp 53a (upshift timing indicating means).

When early activation of the catalyst 9 is still underway while traveling in the first speed and the driver performs an upshift from the first speed to the second speed before the upshift timing from the first speed to the second speed is reached, i.e. ignoring the indication of the first indication lamp 53a (upshift timing indicating means), the engine rotation speed Ne falls, the exhaust gas temperature decreases, and the early activation processing of the catalyst 9 ends without producing a sufficient result. According to the third embodiment, however, when the upshift timing from the first speed to the second speed has not yet been reached, the "catalyst warm-up underway" message is displayed on the driving seat monitor (display device) while waiting for the upshift timing from the first speed to the second speed in accordance with the indication of the first indication lamp 53a (upshift timing indicating means), and the "environmental deterioration" message is displayed on the driving seat monitor (display device) when the upshift timing from the first speed to the second speed is not waited for in accordance with the indication of the first indication lamp 53a (the steps 21, 22, 23, 24, and the steps 21, 22, 23, 25, 26 in FIG. 7). Thus, the driver is motivated to wait for the upshift timing, and opportunities for early activation of the catalyst 9 can be increased correspondingly.

By displaying environmental concerns, as in the step 24 in FIG. 7 of the third embodiment, drivers who are interested in environmental protection are more likely to perform an upshift in accordance with the indication of the first indication lamp 53a (upshift timing indicating means).

When "environmental deterioration" is displayed on the driving seat monitor, as in the step 26 in FIG. 7 of the third embodiment, drivers who are interested in environmental protection are more likely to perform an upshift in accordance with the indication of the first indication lamp 53a (upshift timing indicating means).

In the third embodiment, a case in which only the upshift timing from the first speed to the second speed takes different values before the completion of engine warm-up and after the completion of engine warm-up was described, but the third embodiment may also be applied to a case in which the upshift timings to other shift speeds (the upshift timings from the second speed to the third speed, from the third speed to the fourth speed, and from the fourth speed to the fifth speed) are also varied.

### INDUSTRIAL FIELD OF APPLICATION

In the invention described above, a driver can be informed of an optimum speed shift timing in accordance with the engine warm-up state, and therefore, in a vehicle comprising a speed shift device which achieves speed shifts through speed shift operations performed by the driver, an improvement in fuel economy and early catalyst activation can be achieved. This invention exhibits particularly favorable effects when applied to a vehicle comprising either a manual transmission or an automatic transmission having a manual mode in which speed shifts are performed in accordance with driver instructions.

The embodiments of this invention in which an exclusive property or privilege is claimed are defined as follows:

## Claims

1. An upshift timing indication device for indicating to a driver a timing for performing an upshift to a predetermined shift speed in accordance with a vehicle speed, comprising:
speed information detecting means (38) for detecting speed information relating to the vehicle;
warm-up completion determining means (31, 35, 37) for determining whether or not an engine warm-up is complete; and **characterized by**
upshift vehicle speed modifying means (31) which, when the engine warm-up is not complete, modify an upshift vehicle speed indicated to the driver to a higher side of an upshift vehicle speed following engine warm-up completion; and
shift timing indicating means (31, 53) for indicating the upshift timing to the driver when the vehicle reaches a vehicle speed set by the upshift vehicle speed modifying means, or for indicating that the upshift timing of a manual transmission has arrived even if the upshift vehicle speed modified to the higher side by the engine warm-up completion determining means has not been reached when a predetermined time has elapsed after exceeding the upshift vehicle speed that is set following engine warm-up completion.

2. The shift timing indication device as defined in Claim 1, further comprising engine water temperature detecting means (35) for detecting an engine water temperature during start-up, wherein the upshift vehicle speed modifying means modify the upshift vehicle speed indicated to the driver toward the higher side as the water temperature during start-up decreases.

3. The shift timing indication device as defined in Claim 1 or Claim 2, further comprising the engine water temperature detecting means (35) for detecting the engine water temperature during start-up,
wherein the shift timing indication device (31, 53) makes the predetermined time longer as the water temperature during start-up decreases.

4. The shift timing indication device as defined in Claim 1 or Claim 3, further comprising a catalyst (9) for purifying a harmful substance in an engine exhaust gas,
wherein the warm-up completion determining means (31, 53) determine that the warm-up is not complete prior to activation of the catalyst.

5. The shift timing indication device as defined in Claim 4, wherein the warm-up completion determining means (31, 53) determine that activation of the catalyst is complete on the basis of an exhaust gas temperature or a catalyst temperature.

6. The shift timing indication device as defined in any of Claims 1 through 5, further comprising time display means for displaying the predetermined time.

7. The shift timing indication device as defined in any of Claims 1 through 6, further comprising message display means which, when the engine warm-up is not complete and the upshift vehicle speed modifying means modify the upshift vehicle speed indicated to the driver to the higher side of the upshift vehicle speed following engine warm-up completion, display a message indicating this fact.

## Patentansprüche

1. Hochschaltzeitpunkt-Angabeeinrichtung zur Angabe eines Zeitpunkts für einen Fahrer zum Ausführen eines Hochschaltens auf eine vorbestimmte Schaltgetriebestufe entsprechend zu einer Fahrzeuggeschwindigkeit, mit:
einer Geschwindigkeitsinformation-Erfassungseinheit (38) zur Erfassung einer Geschwindigkeitsinformation, die das Fahrzeug betrifft;
einer Warmlaufende-Ermittlungseinheit (31, 35, 37) zur Ermittlung, ob ein Motorwarmlauf abgeschlossen ist oder nicht; **gekennzeichnet durch**
eine Hochschaltfahrzeuggeschwindigkeits-Modifiziereinheit (31), die, wenn der Motorwarmlauf nicht abgeschlossen ist, eine Hochschalt-Fahrzeuggeschwindigkeit, die dem Fahrer angegeben wird, auf einen höheren Wert als eine Hochschalt-Fahrzeuggeschwindigkeit für beendeten Motorwarmlauf modifiziert; und
eine Schaltzeitpunkt-Angabeeinheit (31, 53) zur Angabe des Hochschaltzeitpunkts für den Fahrer, wenn das Fahrzeug eine Fahrzeuggeschwindigkeit erreicht, die von der Hochschaltfahrzeuggeschwindigkeits-Modifiziereinheit festgelegt ist, oder zur Angabe, dass der Hochschaltzeitpunkt eines manuellen Getriebes erreicht ist, selbst wenn die von der MotorwarmlaufendeErmittlungseinheit auf den höheren Wert modifizierte Hochschalt-Fahrzeuggeschwindigkeit nicht erreicht ist, wenn eine vorbestimmte Zeit nach Überschreitung der Hochschalt-Fahrzeuggeschwindigkeit verstrichen ist, die für den beendeten Motorwarmlauf festgelegt ist.

2. Hochschalterzeitpunkt-Angabeeinrichtung nach Anspruch 1, die ferner eine Motorkühlwassertemperatur-Erfassungseinheit (35) aufweist, um eine Motorkühlwassertemperatur beim Anlaufen zu erfassen, wobei die Hochschaltfahrzeuggeschwindigkeits-Modifiziereinheit die Hochschalt-Fahrzeuggeschwindigkeit, die dem Fahrer vermittelt wird, in Richtung zu dem höheren Wert modifiziert, wenn die Kühlwassertemperatur während des Anlaufens abnimmt.

3. Hochschaltzeitpunkt-Angabeeinrichtung nach Anspruch 1 oder Anspruch 2, die ferner die Motorkühlwassertemperatur-Erfassungseinheit (35) zur Erfassung der Motorkühlwassertemperatur während des Anlaufens aufweist,
wobei die Schaltzeitpunkt-Angabeeinheit (31, 53) die vorbestimmte Zeit verlängert, wenn die Kühlwassertemperatur während des Anlaufens abnimmt.

4. Hochschaltzeitpunkt-Angabeeinrichtung nach Anspruch 1 oder Anspruch 3, die ferner einen Katalysator (9) zur Reinigung einer gefährlichen Substanz in einem Motorabgas aufweist, wobei die Warmlaufende-Ermittlungseinheit (31, 53) bestimmt, dass das Warmlaufen vor der Aktivierung des Katalysators nicht beendet ist.

5. Hochschaltzeitpunkt-Angabeeinrichtung nach Anspruch 4, wobei die WarmlaufendeErmittlungseinheit (31, 52) auf der Grundlage einer Abgastemperatur oder einer Katalysatortemperatur bestimmt, dass die Aktivierung des Katalysators abgeschlossen ist.

6. Hochschaltzeitpunkt-Angabeeinrichtung nach einem der Ansprüche 1 bis 5, die ferner eine Zeitanzeigeeinheit zum Anzeigen der vorbestimmten Zeit umfasst.

7. Hochschaltzeitpunkt-Angabeeinrichtung nach einem der Ansprüche 1 bis 6, die ferner eine Nachrichtenanzeigeeinheit umfasst, die, wenn der Motorwarmlauf nicht beendet ist und die Hochschaltfahrzeuggeschwindigkeits-Modifiziereinheit die Hochschalt-Fahrzeuggeschwindigkeit, die dem Fahrer vermittelt wird, auf den höheren Wert als die Hochschalt-Fahrzeuggeschwindigkeit für beendeten Motorwarmlauf modifiziert, eine Nachricht anzeigt, die diese Tatsache angibt.

## Revendications

1. Dispositif d'indication du moment d'une montée de rapport pour indiquer à un conducteur le moment de la mise en oeuvre d'une montée de rapport à une vitesse de changement de rapport prédéterminée conformément à une vitesse de véhicule, comprenant :
un moyen de détection d'information de vitesse (38) pour détecter de l'information de vitesse relative au véhicule ;
un moyen de détermination d'accomplissement de chauffage (31, 35, 37) pour déterminer si un chauffage du moteur est accompli ou non ;
et **caractérisé par**
un moyen de modification de la vitesse du véhicule pour une montée de rapport (31) qui, quand le chauffage du moteur n'est pas accompli, modifie une vitesse du véhicule pour une montée de rapport indiquée au conducteur vers le haut par rapport à une vitesse du véhicule pour une montée de rapport après accomplissement du chauffage du moteur ; et
un moyen d'indication du moment de changement de rapport (31, 53) pour indiquer un moment de montée de rapport au conducteur quand le véhicule atteint une vitesse de véhicule établie par le moyen de modification de la vitesse du véhicule pour une montée de rapport, ou pour indiquer que le moment de montée de rapport d'une transmission manuelle est arrivé même si la vitesse du véhicule pour une montée de rapport modifiée vers le haut par le moyen de détermination d'accomplissement de chauffage du moteur n'a pas été atteinte quand un temps prédéterminé s'est écoulé après avoir dépassé la vitesse du véhicule pour une montée de rapport qui est établie après accomplissement du chauffage du moteur.

2. Dispositif d'indication du moment d'un changement de rapport selon la revendication 1, comprenant en outre un moyen de détection de la température d'eau du moteur (35) pour détecter la température d'eau du moteur durant le démarrage, dans lequel le moyen de modification de la vitesse du véhicule pour une montée de rapport modifie la vitesse du véhicule pour une montée de rapport indiquée au conducteur vers le haut quand la température de l'eau lors du démarrage diminue.

3. Dispositif d'indication du moment d'un changement de rapport selon la revendication 1 ou 2, comprenant en outre le moyen de détection de la température d'eau du moteur (35) pour détecter la température d'eau du moteur durant le démarrage,
dans lequel le dispositif d'indication du moment d'un changement de rapport (31, 53) prolonge le temps prédéterminé quand la température de l'eau lors du démarrage diminue.

4. Dispositif d'indication du moment d'un changement de rapport selon la revendication 1 ou 3, comprenant en outre un catalyseur (9) pour purifier une substance nocive dans un gaz d'échappement du moteur,
dans lequel le moyen de détermination de l'accomplissement du chauffage (31, 53) détermine que le chauffage n'est pas accompli avant l'activation du catalyseur.

5. Dispositif d'indication du moment d'un changement de rapport selon la revendication 4, dans lequel le moyen de détermination de l'accomplissement du chauffage (31, 53) détermine que l'activation du catalyseur est accomplie sur base d'une température de gaz d'échappement ou d'une température de catalyseur.

6. Dispositif d'indication du moment d'un changement de rapport selon l'une quelconque des revendications 1 à 5, comprenant en outre un moyen d'affichage temporel pour afficher le temps prédéterminé.

7. Dispositif d'indication du moment d'un changement de rapport selon l'une quelconque des revendications 1 à 6, comprenant en outre un moyen d'affichage de message qui, quand le chauffage du moteur n'est pas accompli et que le moyen de modification de la vitesse du véhicule pour une montée de rapport modifie la vitesse du véhicule pour une montée de rapport indiquée au conducteur vers le haut par rapport à la vitesse du véhicule pour une montée de rapport suite à l'accomplissement du chauffage du moteur, affiche un message indiquant ce fait.
